# EUROPÄISCHE PATENTSCHRIFT

(11) **EP 3 688 067 B1**
(45) Veröffentlichungstag und Bekanntmachung des Hinweises auf die Patenterteilung: **01.12.2021**
(21) Anmeldenummer: 19783058.1
(22) Anmeldetag: 09.10.2019
(51) Int. Cl.: C08G 69/40

(54) **FORMMASSE ENTHALTEND POLYETHERBLOCKAMID (PEBA)**
MOULDING MATERIAL CONTAINING POLYETHER BLOCK AMIDE (PEBA)
MATIÈRE DE MOULAGE CONTENANT DES AMIDES DE POLYÉTHER SÉQUENCÉ (PEBA)

(30) Priorität: 19.12.2018 EP 18213932
(43) Veröffentlichungstag der Anmeldung: 05.08.2020
(73) Patentinhaber: Evonik Operations GmbH, 45128 Essen (DE)
(72) Erfinder: BAUMANN, Franz-Erich, 48249 Dülmen (DE); SALWICZEK, Kathrin, 45665 Recklinghausen (DE); RICHTER, Alexander, 45721 Haltern am See (DE)
(74) Vertreter: Evonik Patent Association
(86) Internationale Anmeldenummer: PCT/EP2019/077424
(87) Internationale Veröffentlichungsnummer: WO 2020/126148

(56) Entgegenhaltungen:
- WO-A1-2019/138202
- WO-A1-2020/008134
- GB-A- 2 044 785
- US-A- 4 438 240

## Beschreibung

Die vorliegende Erfindung betrifft Formmasse enthaltend Polyetherblockamid (PEBA), einen geformten Gegenstand daraus und seine Verwendung.

Polyetherblockamide (PEBA) sind Blockcopolymere, welche durch Polykondensation von (Oligo-)Polyamiden, insbesondere säuregeregelten Polyamiden, mit alkohol- oder aminoterminierten Polyethern erhalten werden. Säuregeregelte Polyamide weisen Carbonsäureendgruppen im Überschuss auf. Die Polyamidblöcke bezeichnet der Fachmann als Hartblöcke und die Polyetherblöcke als Weichblöcke. Ihre Herstellung ist prinzipiell bekannt. Die DE2712987A1 (US4207410) beschreibt derartige Polyamid-Elastomere aus Lactamen mit 10 ― 12 C-Atomen, Dicarbonsäuren und Polyetherdiolen. Die hiernach erhältlichen Produkte zeichnen sich durch dauerhafte Flexibilität und Duktilität auch bei tiefen Temperaturen aus, sind aber bereits in Formteilen mäßiger Schichtdicke trübe bis opak und fallen bei längerem Lagern bei Raumtemperatur durch oberflächliche Beläge, mit einem mehltauähnlichen Aspekt, auf. Ähnlich aufgebaute Polyamid-Elastomere, aufgebaut aus Diaminen mit 6 ― 20 C-Atomen, aliphatischen oder aromatischen Dicarbonsäuren und Polyetherdiolen sind aus EP0095893 bekannt. Kennzeichnende Eigenschaften sind eine erhöhte Wärmeformbeständigkeit und Flexibilität. Hinsichtlich Transluzenz der Formteile und Belagsbildung lassen sich aus dieser Schrift keine Angaben entnehmen.

PA11-basierte und PA12-basierte PEBA-Formmassen fallen ebenfalls durch opaken, trüben Aspekt und Bildung von Oberflächenbelägen negativ auf. Weiterhin wurde beobachtet, dass sie einen hohen Belag bei gleichzeitig geringer Transluzenz aufweisen. Die aktuellen Formmassen sind daher für Anwendungen wenig geeignet.

Insofern war es Aufgabe der vorliegenden Erfindung, geeignete Formmassen bereitzustellen, welche eine hohe Transluzenz mit geringem Haze und eine Belagsfreiheit auch über einen längeren Zeitraum mit sich bringen.

Gelöst werden konnte diese Aufgabe durch eine Formmasse enthaltend Polyetherblockamid (PEBA) auf Basis einer Untereinheit 1 aus mindestens einem linearen aliphatischen Diamin mit 5 bis 15 C-Atome, vorzugsweise 6 bis 12 C-Atomen und mindestens einer linearen aliphatischen Dicarbonsäure mit 6 bis 16 C-Atomen, vorzugsweise 6 bis 14 C-Atomen und einer Untereinheit 2 aus mindestens einem Polyetherdiol mit wenigstens 3 C-Atomen pro Ethersauerstoff und primären OH-Gruppen an den Kettenenden. Die Summe der C-Atome aus Diamin und Dicarbonsäure ist ungeradzahlig und beträgt 19 oder 21 C-Atome; die zahlenmittlere molare Masse der Untereinheit 2 beträgt 200 bis 900 g/mol. Vorzugsweise beträgt die molare Masse der Untereinheit 400 bis 700 g/mol. Die Untereinheit 1 bildet damit den allgemein als Hartblock bezeichneten Teil, die Untereinheit 2 den Weichblock. Der Begriff linear ist derart zu verstehen, dass die Kohlenstoffketten keine Verzweigungen aufweisen.

In einer bevorzugten Ausführungsform beträgt die zahlenmittlere molare Masse der Untereinheit 1 250 bis 4500 g/mol, besonders bevorzugt 400 bis 2500 g/mol, weiter besonders bevorzugt 400 bis 2000 g/mol, ganz besonders bevorzugt 500 bis 1600 g/mol. Dies führt zu einem Material mit höherer Transluzenz bei gleichzeitig geringerer Belagsbildung.

Das Polyetherdiol des PEBA ist vorzugsweise ausgewählt aus Polypropandiol-1,3, Polytetramethylenglykol und Mischungen daraus.

Die Summe der C-Atome aus Diamin und Dicarbonsäure im PEBA ist ungeradzahlig. Sie beträgt 19 oder 21. Bevorzugt lautet die Summe 19.

Es ist weiterhin bevorzugt, dass die Anzahl an C-Atomen im Diamin geradzahlig und die Anzahl an C-Atomen in der Säure ungeradzahlig ist.

Geeignete Polyamide der Untereinheit 1 werden beispielsweise ausgewählt aus 5.14, 5.16, 6.13, 6.15, 7.12, 7.14, 8.11, 8.13, 9.10, 9.12, 10.9, 10.11, 11.8, 11.10, 12.7, 12.9, 13.6, 13.8. Weiterhin ist es bevorzugt, dass die Untereinheit 1 ausgewählt ist aus Polyamid 6.13, 10.9 und 12.9.

Ein weiterer Gegenstand der Erfindung ist ein geformter Gegenstand, hergestellt aus der erfindungsgemäßen Formmasse. Vorzugsweise ist der geformte Gegenstand ein Formteil, eine Folie, eine Borste, eine Faser oder ein Schaum. Der geformte Gegenstand kann beispielsweise hergestellt werden durch Pressen, Schäumen, Extrusion, Coextrusion, Blasformen, 3D-Blasformen, Coextrusionsblasformen, Coextrusions-3D-Blasformen, Coextrusions-Saugblasformen oder Spritzgießen. Dem Fachmann sind derartige Verfahren bekannt.

Ein weiterer Gegenstand der Erfindung stellt die Verwendung des erfindungsgemäßen geformten Gegenstands dar, welcher beispielsweise als Faserverbundbauteil, Schuhsohle, Oberbeläge von Skiern oder Snowboards, Medienleitung, Brillengestell, Designartikel, Dichtungsmaterial, Körperschutz (Body Protection), Dämmstoff oder foliertes Gehäuseteil genutzt werden kann.

### Beispiele

### Herstellung der Polyetherblockamide (PEBA)

Allgemeine Arbeitsweise zur Herstellung der PEBA:
Im Vorlagekessel einer 100 L-Zweikessel-Polykondensationsanlage, versehen mit einem Ankerrührer, werden unterhalb 60 °C nacheinander das Diamin, 10% dessen Masse vollentsalztes (VE-) Wasser, Dicarbonsäure und das Polyetherdiol Polytetrahydrofuran (PTHF) vorgelegt. PTHF bildet die Untereinheit 2. Bezogen auf das Polyetherdiol werden 0,1% IRGANOX^{®} 1098 (BASF SE) als Prozessstabilisator zugesetzt. Bezogen auf den gesamten Feststoffgehalt werden 0,3 % 50 %ige hypophosphorige Säure als Katalysator zugesetzt. Nach mehrfacher Druckinertisierung mit N₂ wird der Kesselinhalt auf 180 °C ― 190 °C erhitzt; bei 160 °C wird der Rührer zugeschaltet. Die Einsatzstoffe werden 1 Stunde verrührt und danach in den Polykondensationsreaktor, versehen mit einem Wendelrührer und Drehmomentaufnahme, überführt. Nach erfolgtem Druckausgleich zwischen beiden Behältern wird das Reaktorventil geschlossen und der Inhalt unter Rühren bei 25 Upm innerhalb von 6 Stunden auf 245°C gebracht. Bei Erreichen von 21 bar autogenem Druck ― normalerweise zwischen 210°C und 225°C Innentemperatur ― wird eine zweistündige Druckhaltestufe eingehalten und danach kontinuierlich unter weiterem Hochheizen auf Atmosphärendruck entspannt. Nach 3 ― 4 Stunden bei Atmosphärendruck wird innerhalb von 5 Stunden Vakuum angelegt, bis ein Endvakuum von 40 -60 mbar erreicht ist. Unter diesen Bedingungen wird weiter gerührt, bis das gewünschte Enddrehmoment erreicht ist. Die Schmelze wird als Strang in ein Wasserbad ausgefahren, granuliert und bei 70 °C ― 90 °C in einem Taumeltrockner auf einen Wassergehalt < 0,1 % getrocknet.

Stoffmengenverhältnis Untereinheit 1 zu Untereinheit 2:
Beispiele 1 bis 14, 51-55 und 58-60: 100:103; Beispiele 15-35, 48-50 und 56-57: 100:102; Beispiele 36-40: 100:105.

Einige der PEBA wurden im Nachgang zur Trocknung nach dem in DE4301801A1 beschriebenen Verfahren in fester Phase bei 130 °C ― 135 °C mit 0,95 Gew.-% eines Stabilisatorgemisches, bezogen auf das Gesamtgewicht an PEBA und Stabilisator, versetzt (nachfolgend gekennzeichnet mit "st").

In der folgenden Tabelle 1 sind die hergestellten PEBA zusammengefasst. Die Beispiele 7-14, 27-35 und 53-58 sind erfindungsgemäß, die Beispiele 1-6, 15-26, 36-52, 59 und 60 sind nichterfindungsgemäße Vergleichsbeispiele. Die molare Masse der

Untereinheit 1 ergibt sich aus dem Stoffmengenverhältnis der eingesetzten Dicarbonsäure und des Diamins.

**Tabelle 1: Dargestellte PEBA**

| **Versuch** | **Diamin** | **Einwaage Diamin** | **Dicarbonsäure** | **Einwaage Dicarbonsäure** | **Mn Untereinheit 1** | **Mn pTHF** | **pTHF-Einwaage** | **Produkt** |
|---|---|---|---|---|---|---|---|---|
| 1 | 6 | 11,999 | 10 | 23,694 | 2300 | 650 | 9,286 | PEBA 6.10 |
| 2 | 6 | 8,823 | 10 | 20,186 | 1100 | 650 | 15,955 | PEBA 6.10 |
| 3 | 6 | 7,16 | 10 | 18,35 | 800 | 650 | 19,447 | PEBA 6.10 |
| 4 | 6 | 11,999 | 10 | 23,694 | 2300 | 650 | 9,286 | PEBA 6.10-st |
| 5 | 6 | 8,823 | 10 | 20,186 | 1100 | 650 | 15,955 | PEBA 6.10-st |
| 6 | 6 | 7,16 | 10 | 18,35 | 800 | 650 | 19,447 | PEBA 6.10-st |
| 7 | 6 | 10,36 | 13 | 25,219 | 2300 | 650 | 9,4 | PEBA 6.13 |
| 8 | 6 | 7,396 | 13 | 21,446 | 1100 | 650 | 16,122 | PEBA 6.13 |
| 9 | 6 | 5,848 | 13 | 19,476 | 800 | 650 | 19,632 | PEBA 6.13 |
| 10 | 6 | 4,379 | 13 | 17,606 | 600 | 650 | 22,964 | PEBA 6.13 |
| 11 | 6 | 10,36 | 13 | 25,219 | 2300 | 650 | 9,4 | PEBA 6.13-st |
| 12 | 6 | 7,396 | 13 | 21,446 | 1100 | 650 | 16,122 | PEBA 6.13-st |
| 13 | 6 | 5,848 | 13 | 19,476 | 800 | 650 | 19,632 | PEBA 6.13-st |
| 14 | 6 | 4,379 | 13 | 17,606 | 600 | 650 | 22,964 | PEBA 6.13-st |
| 15 | 10 | 14,986 | 10 | 20,472 | 2268 | 650 | 9,521 | PEBA 10.10 |
| 16 | 10 | 10,927 | 10 | 17,755 | 1083 | 650 | 16,282 | PEBA 10.10 |
| 17 | 10 | 8,758 | 10 | 16,303 | 780 | 650 | 19,894 | PEBA 10.10 |
| 19 | 10 | 15,296 | 13 | 23,832 | 4096 | 650 | 5,859 | PEBA 10.13 |
| 20 | 10 | 13,176 | 13 | 22,196 | 2268 | 650 | 9,607 | PEBA 10.13 |
| 21 | 10 | 11,211 | 13 | 20,68 | 1509 | 650 | 13,08 | PEBA 10.13 |
| 22 | 10 | 9,243 | 13 | 19,162 | 1068 | 650 | 16,558 | PEBA 10.13 |
| 23 | 10 | 15,296 | 13 | 23,832 | 4096 | 650 | 5,859 | PEBA 10.13-st |
| 24 | 10 | 13,176 | 13 | 22,196 | 2268 | 650 | 9,607 | PEBA 10.13-st |
| 25 | 10 | 11,211 | 13 | 20,68 | 1509 | 650 | 13,08 | PEBA 10.13-st |
| 26 | 10 | 9,243 | 13 | 19,162 | 1068 | 650 | 16,558 | PEBA 10.13-st |
| 27 | 10 | 17,959 | 9 | 21,246 | 4096 | 650 | 5,781 | PEBA 10.9 |
| 28 | 10 | 15,685 | 9 | 19,806 | 2268 | 650 | 9,487 | PEBA 10.9 |
| 29 | 10 | 13,574 | 9 | 18,469 | 1509 | 650 | 12,928 | PEBA 10.9 |
| 30 | 10 | 11,455 | 9 | 17,128 | 1068 | 650 | 16,38 | PEBA 10.9 |
| 31 | 10 | 7,481 | 9 | 14,612 | 600 | 650 | 22,856 | PEBA 10.9 |
| 32 | 10 | 17,959 | 9 | 21,246 | 4096 | 650 | 5,781 | PEBA 10.9-st |
| 33 | 10 | 15,685 | 9 | 19,806 | 2268 | 650 | 9,487 | PEBA 10.9-st |
| 34 | 10 | 13,574 | 9 | 18,469 | 1509 | 650 | 12,928 | PEBA 10.9-st |
| 35 | 10 | 11,455 | 9 | 17,128 | 1068 | 650 | 16,38 | PEBA 10.9-st |
| 36 | 6 | 11,111 | 13 | 25,38 | 4000 | 1000 | 8,449 | PEBA 6.13 |
| 37 | 6 | 9,31 | 13 | 22,664 | 2300 | 1000 | 12,934 | PEBA 6.13 |
| 38 | 6 | 6,197 | 13 | 17,971 | 1100 | 1000 | 20,684 | PEBA 6.13 |
| 39 | 6 | 11,111 | 13 | 25,38 | 4000 | 1000 | 8,449 | PEBA 6.13-st |
| 40 | 6 | 6,197 | 13 | 17,971 | 1100 | 1000 | 20,684 | PEBA 6.13-st |
| 48 | 6 | 6,056 | 9 | 16,202 | 600 | 650 | 22,691 | PEBA 6.9-st |
| 49 | 6 | 9,310 | 9 | 19,602 | 1083 | 650 | 16,052 | PEBA 6.9-st |
| 50 | 6 | 10,924 | 9 | 21,288 | 1509 | 650 | 12,760 | PEBA 6.9-st |
| 51 | 7 | 11,053 | 10 | 21,058 | 1509 | 650 | 12,861 | PEBA 7.10 |
| 52 | 5 | 9,702 | 12 | 24,409 | 1760 | 650 | 11,493 | PEBA 5.12 |
| 53 | 7 | 9,952 | 12 | 22,065 | 1509 | 650 | 12,954 | PEBA 7.12 |
| 54 | 7 | 5,095 | 12 | 16,917 | 600 | 650 | 22,937 | PEBA 7.12 |
| 55 | 7 | 9,014 | 14 | 22,923 | 1509 | 650 | 13,034 | PEBA 7.14 |
| 56 | 12 | 12,410 | 9 | 16,251 | 1083 | 650 | 16,302 | PEBA 12.9-st |
| 57 | 12 | 8,030 | 9 | 14,000 | 600 | 650 | 22,919 | PEBA 12.9-st |
| 58 | 6 | 8,789 | 13 | 23,219 | 1509 | 650 | 12,963 | PEBA 6.13-st |
| 59 | 7 | 9,465 | 13 | 22,510 | 1509 | 650 | 12,996 | PEBA 7.13 |
| 60 | 7 | 4,710 | 13 | 17,246 | 600 | 650 | 22,993 | PEBA 7.13 |

| | | | | | | | | |
|---|---|---|---|---|---|---|---|---|
| Alle Einwaagen in kg | | | | | | | | |

| | |
|---|---|
| Diamin 5 = 1,5-Diaminopentan | Diamin 6 = Hexamethylendiamin |
| Diamin 7 = 1,7-Diaminoheptan | Diamin 10 = 1,10-Decamethylendiamin |
| Dicarbonsäure 9 = Azelainsäure | Dicarbonsäure 10 = Sebacinsäure |
| Dicarbonsäure 12 = Dodecandisäure | Dicarbonsäure 13 = Brassylsäure |
| Dicarbonsäure 14 = Tetradecandisäure | |
| pTHF = Polytetrahydrofuran | |
| Zusatz "st": stabilisiert mit Stabilisatorgemisch | |

Die dargestellten PEBA wurden hinsichtlich Strang-Aspekt, relativer Viskosität ηᵣₑₗ und Schmelzpunkt Tm untersucht (vgl. Tab. 2). Strang-Aspekt: Visuelle Betrachtung. Viskosität: ISO 307. Tm: DSC, 2. Aufheizen nach ISO 11357.

**Tabelle 2: Eigenschaften der dargestellten PEBA**

| **Versuch** | **Produkt** | **Strang-Aspekt** | **ηᵣₑₗ** | **Tm (DSC, 2. Aufh.)** |
|---|---|---|---|---|
| 1 | PEBA 6.10 | transluzent | 1,81 | 219 |
| 2 | PEBA 6.10 | transluzent | 1,83 | 214 |
| 3 | PEBA 6.10 | transluzent | 1,96 | 210 |
| 4 | PEBA 6.10-st | transluzent | 1,81 | 219 |
| 5 | PEBA 6.10-st | transluzent | 1,83 | 214 |
| 6 | PEBA 6.10-st | transluzent | 1,96 | 210 |
| 7 | PEBA 6.13 | transluzent | 1,87 | 199 |
| 8 | PEBA 6.13 | transluzent | 1,84 | 195 |
| 9 | PEBA 6.13 | transluzent | 1,9 | 191 |
| 10 | PEBA 6.13 | transluzent | 1,96 | 185 |
| 11 | PEBA 6.13-st | transluzent | 1,87 | 199 |
| 12 | PEBA 6.13-st | transluzent | 1,84 | 195 |
| 13 | PEBA 6.13-st | transluzent | 1,9 | 191 |
| 14 | PEBA 6.13-st | transluzent | 1,96 | 185 |
| 15 | PEBA 10.10 | transluzent | 1,75 | 194 |
| 16 | PEBA 10.10 | transluzent | 1,94 | 184 |
| 17 | PEBA 10.10 | transluzent | 1,85 | 179 |
| 19 | PEBA 10.13 | transluzent | 1,9 | 166 |
| 20 | PEBA 10.13 | transluzent | 1,85 | 172 |
| 21 | PEBA 10.13 | transluzent | 1,83 | 175 |
| 22 | PEBA 10.13 | transluzent | 1,9 | 164 |
| 23 | PEBA 10.13-st | transluzent | 1,9 | 166 |
| 24 | PEBA 10.13-st | transluzent | 1,85 | 172 |
| 25 | PEBA 10.13-st | transluzent | 1,83 | 175 |
| 26 | PEBA 10.13-st | transluzent | 1,9 | 164 |
| 27 | PEBA 10.9 | transluzent | 1,86 | 179 |
| 28 | PEBA 10.9 | transluzent | 1,86 | 177 |
| 29 | PEBA 10.9 | transluzent | 1,87 | 172 |
| 30 | PEBA 10.9 | transluzent | 1,89 | 168 |
| 31 | PEBA 10.9 | transluzent | 1,76 | 153 |
| 32 | PEBA 10.9-st | transluzent | 1,86 | 179 |
| 33 | PEBA 10.9-st | transluzent | 1,86 | 177 |
| 34 | PEBA 10.9-st | transluzent | 1,87 | 172 |
| 35 | PEBA 10.9-st | transluzent | 1,89 | 168 |
| 36 | PEBA 6.13 | weiß-opak | 1,86 | 195 |
| 37 | PEBA 6.13 | weiß-opak | 1,88 | 193 |
| 38 | PEBA 6.13 | weiß-opak | 2,19 | 188 |
| 39 | PEBA 6.13-st | weiß-opak | 1,86 | 195 |
| 40 | PEBA 6.13-st | weiß-opak | 2,19 | 188 |
| 48 | PEBA 6.9-st | milchig-weiß | 1,97 | 195 |
| 49 | PEBA 6.9-st | milchig-weiß | 1,89 | 203 |
| 50 | PEBA 6.9-st | milchig-weiß | 1,81 | 204 |
| 51 | PEBA 7.10 | milchig-trüb | 1,73 | 199 |
| 52 | PEBA 5.12 | milchig-trüb | 1,21 | 198 |
| 53 | PEBA 7.12 | transluzent | 1,6 | 189 |
| 54 | PEBA 7.12 | transluzent | 2,01 | 183 |
| 55 | PEBA 7.14 | transluzent | 1,85 | 173 |
| 56 | PEBA 12.9-st | transluzent | 1,93 | 173 |
| 57 | PEBA 12.9-st | transluzent | 1,76 | 151 |
| 58 | PEBA 6.13-st | transluzent | 1,79 | 186 |
| 59 | PEBA 7.13 | trüb | 1,48 | 170 |
| 60 | PEBA 7.13 | trüb | 1,84 | 177 |

Des Weiteren wurden kommerziell erhältliche PEBAs auf PA12- oder PA11-Basis untersucht. Diese werden von Evonik (Vestamid^{®}) oder Arkema (PEBAX^{®}) angeboten.

### Prüfung der hergestellten Polyetherblockamide

### Belagstest

Aus den Polyetherblockamiden wurden Spritzplatten mit den Maßen 60 mm x 60 mm x 2 mm als Probenkörper gefertigt. Die Belagsbildung wurde ermittelt, nachdem der Probenkörper in einem geschlossenen Gefäß und Wasserdampfsättigung bei 75°C über einen Prüfzeitraum von 10 Tagen gelagert wurde. Der Belag wurde visuell mit einer vierstufigen Skala (von 0-3, wobei 0 = belagsfrei ist und 3 = stark belegt ist) beurteilt

Für einige Proben wurden keine Belagstests vorgenommen. In diesen Fällen fehlt ein Eintrag in den folgenden Tabellen.

### Bestimmung Transluzenz

Die Transluzenz der zuvor genannten Probenkörper wurde visuell ermittelt. Hierbei wurde folgende Bewertung vorgenommen (mit sinkender Transluzenz):
0 = transluzent ++
1 = transluzent +
2 = transluzent 0
3 = opak-milchig, transluzent 0
4 = opak-milchig, transluzent ―
5 = milchig-weiß.

### Bestimmung Haze-Wert

Der Haze-Wert bestimmt die Illumination durch einen Gegenstand im Gegenlicht. Hier wird der Haze-Wert anhand der 60 x 60 x 2 mm Platten gemessen nach der ASTM-Norm D 1003 mit Konica-Minolta CM-3600d. Sofern die Probe opak-milchig oder gar milchig-weiß war, wurde in der Regel auf die Bestimmung des Haze-Wertes verzichtet.

**Tabelle 3: Testergebnisse von PEBA 6.10-650 (nicht erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 1 | PEBA 6.10 | 2300 | 650 | 1 | - | 4 |
| 2 | PEBA 6.10 | 1100 | 650 | 0-1 | - | 4 |
| 3 | PEBA 6.10 | 800 | 650 | 1 | - | 4 |
| 4 | PEBA 6.10-st | 2300 | 650 | 1 | - | 4 |
| 5 | PEBA 6.10-st | 1100 | 650 | 1-2 | - | 4 |
| 6 | PEBA 6.10-st | 800 | 650 | 1-2 | - | 4 |

Die Proben von PEBA 6.10 weisen trotz teilweiser guter Belagstestergebnisse eine unzureichend geringe Transluzenz auf.

**Tabelle 4: Testergebnisse von PEBA 6.13-650 (erfindungsgemäß)**

| **Versuch** | **Produkt** | **Mn Unter-einheit 1** | **Mn Untereinheit 2** | **Belagstest** | **Haze-Wert** | **Transluzenz (visuell)** |
|---|---|---|---|---|---|---|
| 7 | PEBA 6.13 | 2300 | 650 | 0 | 60,1 | 2 |
| 8 | PEBA 6.13 | 1100 | 650 | 0-1 | 33,8 | 1 |
| 9 | PEBA 6.13 | 800 | 650 | 0-1 | 20,0 | 0 |
| 10 | PEBA 6.13 | 600 | 650 | 0-1 | 5,3 | 0 |
| 11 | PEBA 6.13-st | 2300 | 650 | 0-1 | 56,1 | 2 |
| 58 | PEBA 6.13-st | 1509 | 650 | 0 | 66,0 | 0-1 |
| 12 | PEBA 6.13-st | 1100 | 650 | 0 | 28,3 | 1 |
| 13 | PEBA 6.13-st | 800 | 650 | 0-1 | 15,3 | 0 |
| 14 | PEBA 6.13-st | 600 | 650 | 1-2 | 5,8 | 0 |

PEBA 6.13 erfüllt sowohl den Belagstest als auch die Anforderungen an die Transluzenz.

**Tabelle 5: Testergebnisse von PEBA 10.10-650 und 7.13-650 (nicht erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 15 | PEBA 10.10 | 2268 | 650 | 0-1 | - | 3 |
| 16 | PEBA 10.10 | 1083 | 650 | 1-2 | - | 3 |
| 17 | PEBA 10.10 | 780 | 650 | 2-3 | - | 3 |
| 59 | PEBA 7.13 | 1509 | 650 | 0 | - | 3 |
| 60 | PEBA 7.13 | 600 | 650 | 2 | - | 2 |

Die Probenkörper von PEBA 10.10 und PEBA 7.13 sind opak-milchig bei geringer Transluzenz oder (Beispiel 60) weisen eine gewisse Transparenz bei erhöhtem Belag auf.

**Tabelle 6: Testergebnisse von PEBA 10.13-650 (nicht erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 19 | PEBA 10.13 | 4096 | 650 | 2 | 63,3 | 2 |
| 20 | PEBA 10.13 | 2268 | 650 | 2 | 49,1 | 1 |
| 21 | PEBA 10.13 | 1509 | 650 | 2 | 23,4 | 0 |
| 22 | PEBA 10.13 | 1068 | 650 | 2 | 16,5 | 0 |
| 23 | PEBA 10.13-st | 4096 | 650 | 2 | 61,3 | 1 |
| 24 | PEBA 10.13-st | 2268 | 650 | 2 | 37,7 | 2 |
| 25 | PEBA 10.13-st | 1509 | 650 | 2 | 22,4 | 1 |
| 26 | PEBA 10.13-st | 1068 | 650 | 2 | 17,0 | 0 |

Sowohl die nicht-stabilisierten als auch die stabilisierten PEBA 10.13 zeigen zwar eine mäßige bis gute Transluzenz, jedoch bestehen diese Proben den Belagstest nicht.

**Tabelle 7: Testergebnisse von PEBA 10.9-650 (erfindungsgemäß)**

| **Versuch** | **Produkt** | **Mn Unter-einheit 1** | **Mn Untereinheit 2** | **Belagstest** | **Haze-Wert** | **Transluzenz (visuell)** |
|---|---|---|---|---|---|---|
| 27 | PEBA 10.9 | 4096 | 650 | 0-1 | 80,2 | 2 |
| 28 | PEBA 10.9 | 2268 | 650 | 1 | 60,2 | 1 |
| 29 | PEBA 10.9 | 1509 | 650 | 0 | 41,1 | 0 |
| 30 | PEBA 10.9 | 1068 | 650 | 0 | 30,8 | 0 |
| 31 | PEBA 10.9 | 600 | 650 | 0 | 22,3 | 0 |
| 33 | PEBA 10.9-st | 4096 | 650 | 1 | 71,4 | 0 |
| 33 | PEBA 10.9-st | 2268 | 650 | 0-1 | 71,7 | 2 |
| 34 | PEBA 10.9-st | 1509 | 650 | 0 | 39,2 | 1 |
| 35 | PEBA 10.9-st | 1068 | 650 | 0 | 25,9 | 0 |

PEBA 10.9 zeigt einen geringen bis gar keinen Belag sowie eine gute bis mäße Transluzenz.

**Tabelle 8: Testergebnisse von PEBA 6.13-1000 (nicht erfindungsgemäß)**

| **Versuch** | **Produkt** | **Mn Unter-einheit 1** | **Mn Untereinheit 2** | **Belagstest** | **Haze-Wert** | **Transluzenz (visuell)** |
|---|---|---|---|---|---|---|
| 36 | PEBA 6.13 | 4000 | 1000 | - | 101 | 5 |
| 37 | PEBA 6.13 | 2300 | 1000 | - | 102 | 5 |
| 38 | PEBA 6.13 | 1100 | 1000 | - | 102 | 5 |
| 39 | PEBA 6.13-st | 4000 | 1000 | - | 101 | 5 |
| 40 | PEBA 6.13-st | 1100 | 1000 | - | 102 | 5 |

PEBA 6.13 mit einer Polyether-Untereinheit, dessen molare Masse 1000 beträgt, führt zu milchigweißen Probekörpern. Demgegenüber weisen PEBA 6.13-Proben mit Polyether-Untereinheit 650 g/mol mäßige bis gute Transluzenz (Versuche 7 bis 14).

**Tabelle 9: Testergebnisse mit kommerziell erhältlichen PEBA**

| **Versuch** | **Produkt** | **Belagstest** | **Transluzenz (visuell)** |
|---|---|---|---|
| 41 | Vestamid E55-S3 | 1-2 | 4 |
| 42 | Vestamid E62-S3 | 1-2 | 4 |
| 43 | Vestamid E40-S3 | 1-2 | 4 |
| 44 | Vestamid E26-S3 | 2-3 | 1 |
| 45 | PEBAX Rnew 55R53 | 1-2 | 1 |
| 46 | PEBAX 6333 | 1-2 | 4 |
| 47 | PEBAX C | 1-2 | 4 |

Der Belagstest zeigt für kommerziell erhältliche PEBA auf PA11- oder PA12-Basis ein mäßiges Ergebnis. Die Transluzenz fällt in den meisten Fällen sehr gering aus.

**Tabelle 10: Testergebnisse von PEBA 6.9-650, PEBA 7.10-650 und 5.12-650 (nicht erfindungsgemäß)**

| **Versuch** | **Produkt** | **Mn Unter-einheit 1** | **Mn Untereinheit 2** | **Belagstest** | **Haze-Wert** | **Transluzenz (visuell)** |
|---|---|---|---|---|---|---|
| 48 | PEBA 6.9-st | 1509 | 650 | 0 | 100,7 | 5 |
| 49 | PEBA 6.9-st | 1083 | 650 | 0 | 101,7 | 5 |
| 50 | PEBA 6.9-st | 600 | 650 | 0-1 | 102 | 5 |
| 51 | PEBA 7.10 | 1509 | 650 | 0 | - | 3 |
| 52 | PEBA 5.12 | 1760 | 650 | 3 | - | 4 |

Proben enthaltend PEBA 6.9, PEBA 7.10 und 5.12 zeigen opak-milchige bis milchig-weiße Probekörper.

**Tabelle 11: Testergebnisse von 7.12-650, 14-650 und 12.9-650 (erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 53 | PEBA 7.12 | 1509 | 650 | 1 | - | 0-1 |
| 54 | PEBA 7.12 | 600 | 650 | 1 | - | 0-1 |
| 55 | PEBA 7.14 | 1509 | 650 | 1 | - | 0-1 |
| 56 | PEBA 12.9-st | 1083 | 650 | 0 | 49,0 | 0-1 |
| 57 | PEBA 12.9-st | 600 | 650 | 0 | 39,0 | 0-1 |

Probekörper enthaltend PEBA 7.12, 7.14 oder 12.9 weisen keinen bis geringen Belag sowie hohe Transparenz auf.

## Patentansprüche

1. Formmasse enthaltend Polyetherblockamid (PEBA) auf Basis einer Untereinheit 1 aus mindestens einem linearen aliphatischen Diamin mit 5 bis 15 C-Atomen und mindestens einer linearen aliphatischen Dicarbonsäure mit 6 bis 16 C-Atomen und einer Untereinheit 2 aus mindestens einem Polyetherdiol mit wenigstens 3 C-Atomen pro Ethersauerstoff und primären OH-Gruppen an den Kettenenden, **dadurch gekennzeichnet, dass** die Summe der C-Atome aus Diamin und Dicarbonsäure ungeradzahlig ist und 19 oder 21 C-Atome beträgt; die zahlenmittlere molare Masse der Untereinheit 2 beträgt 200 bis 900 g/mol.

2. Formmasse nach Anspruch 1, **dadurch gekennzeichnet, dass** die zahlenmittlere molare Masse der Untereinheit 2 400 bis 700 g/mol beträgt.

3. Formmasse nach einem der vorherigen Ansprüche, **dadurch gekennzeichnet, dass** die zahlenmittlere molare Masse der Untereinheit 1 250 bis 4500 g/mol beträgt.

4. Formmasse nach Anspruch 3, **dadurch gekennzeichnet, dass** die zahlenmittlere molare Masse der Untereinheit 1 400 bis 2500 g/mol beträgt.

5. Formmasse nach einem der vorherigen Ansprüche, **dadurch gekennzeichnet, dass** das Polyetherdiol ausgewählt ist aus Polypropandiol-1,3, Polytetramethylenglykol und Mischungen daraus.

6. Formmasse nach einem der vorherigen Ansprüche, **dadurch gekennzeichnet, dass** die Anzahl an C-Atomen im Diamin geradzahlig und die Anzahl an C-Atomen in der Säure ungeradzahlig ist.

7. Formmasse nach einem der vorherigen Ansprüche, **dadurch gekennzeichnet, dass** die Summe der C-Atome aus Diamin und Dicarbonsäure 19 beträgt.

8. Formmasse nach einem der vorherigen Ansprüche, **dadurch gekennzeichnet, dass** die Untereinheit 1 ausgewählt ist aus Polyamid 6.13, 10.9 und 12.9.

9. Formmasse nach einem der vorherigen Ansprüche, **dadurch gekennzeichnet, dass** das lineare aliphatische Diamin 6 bis 12 C-Atome aufweist.

10. Formmasse nach einem der vorherigen Ansprüche, **dadurch gekennzeichnet, dass** die Dicarbonsäure 6 bis 14 C-Atome aufweist.

11. Geformter Gegenstand, hergestellt aus der Formmasse gemäß einem der vorhergehenden Ansprüche.

12. Geformter Gegenstand nach Anspruch 11, **dadurch gekennzeichnet, dass** er ein Formteil, eine Folie, eine Borste, eine Faser oder ein Schaum ist.

13. Geformter Gegenstand nach einem der Ansprüche 11 oder 12, hergestellt durch Pressen, Schäumen, Extrusion, Coextrusion, Blasformen, 3D-Blasformen, Coextrusionsblasformen, Coextrusions-3D-Blasformen, Coextrusions-Saugblasformen oder Spritzgießen.

14. Verwendung eines geformten Gegenstands nach einem der Ansprüche 11 bis 13, als Faserverbundbauteil, Schuhsohle, Oberbeläge von Skiern oder Snowboards, Medienleitung, Brillengestell, Designartikel, Dichtungsmaterial, Körperschutz (Body Protection), Dämmstoff, folierte Gehäuseteile.

## Claims

1. Moulding composition comprising polyether block amide (PEBA) based on a subunit 1, composed of at least one linear aliphatic diamine containing 5 to 15 carbon atoms and at least one linear aliphatic dicarboxylic acid containing 6 to 16 carbon atoms, and on a subunit 2, composed of at least one polyether diol containing at least 3 carbon atoms per ether oxygen and primary OH groups at the chain ends, **characterized in that** the sum total of the carbon atoms from diamine and dicarboxylic acid is an odd number and is 19 or 21 carbon atoms; the number-average molar mass of the subunit 2 is 200 to 900 g/mol.

2. Moulding composition according to Claim 1, **characterized in that** the number-average molar mass of the subunit 2 is 400 to 700 g/mol.

3. Moulding composition according to either of the preceding claims, **characterized in that** the number-average molar mass of the subunit 1 is 250 to 4500 g/mol.

4. Moulding composition according to Claim 3, **characterized in that** the number-average molar mass of the subunit 1 is 400 to 2500 g/mol.

5. Moulding composition according to any of the preceding claims, **characterized in that** the polyether diol is selected from polypropane-1,3-diol, polytetramethylene glycol and mixtures thereof.

6. Moulding composition according to any of the preceding claims, **characterized in that** the number of carbon atoms in the diamine is an even number and the number of carbon atoms in the acid is an odd number.

7. Moulding composition according to any of the preceding claims, **characterized in that** the sum total of the carbon atoms from diamine and dicarboxylic acid is 19.

8. Moulding composition according to any of the preceding claims, **characterized in that** the subunit 1 is selected from nylon-6,13, nylon-10,9 and nylon-12,9.

9. Moulding composition according to any of the preceding claims, **characterized in that** the linear aliphatic diamine has 6 to 12 carbon atoms.

10. Moulding composition according to any of the preceding claims, **characterized in that** the dicarboxylic acid has 6 to 14 carbon atoms.

11. Moulded article produced from the moulding composition according to any of the preceding claims.

12. Moulded article according to Claim 11, **characterized in that** said article is a moulding, a film, a bristle, a fibre or a foam.

13. Moulded article according to either of Claims 11 and 12, produced by compression-moulding, foaming, extrusion, coextrusion, blow moulding, 3D blow moulding, coextrusion blow moulding, coextrusion 3D blow moulding, coextrusion suction blow moulding or injection moulding.

14. Use of a moulded article according to any of Claims 11 to 13 as a fibre composite component, shoe sole, top sheets for skis or snowboards, line for media, spectacle frame, design article, sealing material, body protection, insulating material, housing parts provided with a film.

## Revendications

1. Masse à mouler contenant un polyéther-bloc-amide (PEBA) à base d'une sous-unité 1 composée d'au moins une diamine aliphatique linéaire comportant 5 à 15 atomes de C et d'au moins un acide dicarboxylique aliphatique linéaire comportant 6 à 16 atomes de C et d'une sous-unité 2 composée d'au moins un polyétherdiol comportant au moins 3 atomes de C par oxygène d'éther et des groupes OH primaires aux extrémités de chaînes, **caractérisée en ce que** la somme des atomes de C de la diamine et de l'acide dicarboxylique est impaire et est de 19 ou 21 atomes de C ; la masse molaire moyenne en nombre de la sous-unité 2 est de 200 à 900 g/mole.

2. Masse à mouler selon la revendication 1, **caractérisée en ce que** la masse molaire moyenne en nombre de la sous-unité 2 est de 400 à 700 g/mole.

3. Masse à mouler selon l'une quelconque des revendications précédentes, **caractérisée en ce que** la masse molaire moyenne en nombre de la sous-unité 1 est de 250 à 4 500 g/mole.

4. Masse à mouler selon la revendication 3, **caractérisée en ce que** la masse molaire moyenne en nombre de la sous-unité 1 est de 400 à 2 500 g/mole.

5. Masse à mouler selon l'une quelconque des revendications précédentes, **caractérisée en ce que** le polyétherdiol est choisi parmi un polypropanediol-1,3, un polytétraméthylèneglycol et des mélanges correspondants.

6. Masse à mouler selon l'une quelconque des revendications précédentes, **caractérisée en ce que** le nombre d'atomes de C dans la diamine est pair et le nombre d'atomes de C dans l'acide est impair.

7. Masse à mouler selon l'une quelconque des revendications précédentes, **caractérisée en ce que** la somme des atomes de C de la diamine et de l'acide dicarboxylique est de 19.

8. Masse à mouler selon l'une quelconque des revendications précédentes, **caractérisée en ce que** la sous-unité 1 est choisie parmi un polyamide 6.13, un polyamide 10.9 et un polyamide 12.9.

9. Masse à mouler selon l'une quelconque des revendications précédentes, **caractérisée en ce que** la diamine aliphatique linéaire présente 6 à 12 atomes de C.

10. Masse à mouler selon l'une quelconque des revendications précédentes, **caractérisée en ce que** l'acide dicarboxylique présente 6 à 14 atomes de C.

11. Objet moulé, préparé à partir de la masse à mouler selon l'une quelconque des revendications précédentes.

12. Objet moulé selon la revendication 11, **caractérisé en ce qu'**il s'agit d'une pièce moulée, d'une feuille, d'une soie, d'une fibre ou d'une mousse.

13. Objet moulé selon l'une quelconque des revendications 11 et 12, préparé par pressage, par moussage, par extrusion, par coextrusion, par moulage par soufflage, par moulage par soufflage 3D, par moulage par soufflage-coextrusion, par moulage par soufflage 3D-coextrusion, par moulage par soufflage-aspiration-coextrusion ou par moulage par injection.

14. Utilisation d'un objet moulé selon l'une quelconque des revendications 11 à 13, en tant que composant composite fibreux, semelle de chaussure, revêtements superficiels de skis ou de snowboards, conduit de fluide, monture de lunettes, article de design, matériau d'étanchéité, protection corporelle (protection du corps), matière isolante, parties de boîtier pelliculées.
